# FASCICULE DE BREVET EUROPEEN

(11) **EP 1 767 395 B1**
(45) Date de publication et mention de la délivrance du brevet: **04.09.2013**
(21) Numéro de dépôt: 06300782.7
(22) Date de dépôt: 10.07.2006
(51) Int. Cl.: B60N 2/30

(54) **Siège pliable pour coffre de véhicule automobile**
Klappsitz für Fahrzeugskofferraum
Foldable seat for vehicle boot

(30) Priorité: 27.09.2005 FR 0552904
(43) Date de publication de la demande: 28.03.2007
(73) Titulaire: Renault SAS, 92100 Boulogne Billancourt (FR)
(72) Inventeur: Hewak, Gregor, 95490 Vaureal (FR); Vilatte, Jean René, Avenue Niavaran Area Teheran (IR)

(56) Documents cités:
- EP-A- 0 626 290
- DE-A1- 10 156 644
- DE-A1- 10 348 412

## Description

### DOMAINE TECHNIQUE

La présente invention concerne un siège pouvant être déplié et replié de façon à pouvoir s'escamoter, s'installant plus particulièrement dans le coffre arrière d'un véhicule automobile, (cf. par exemple le document DE 101 56 644 A1, correspondant au préambule de la revendication 1).

L'utilisation d'une banquette arrière rabattable (dans sa totalité, par moitié ou par tiers) dans le but d'augmenter le volume réservé au coffre est courante dans de nombreux véhicules automobiles. La banquette comprend une assise et un dossier. Lors du repliement, l'assise est relevée et basculée vers l'avant, en se positionnant contre le côté arrière du siège du conducteur et du siège du passager avant. Ensuite, le dossier est abaissé et basculé vers l'avant, en se positionnant à la place précédemment occupée par l'assise, contre le plancher du véhicule.

Les utilisateurs souhaitent de plus en plus posséder des véhicules modulaires, en adaptant à volonté le volume situé derrière les sièges avants, en fonction de leurs besoins. Pour ce faire, la banquette arrière rabattable permet de rajouter ou d'enlever à volonté un maximum de trois places assises. Mais dans le cas de véhicule de type monospace, avec la banquette arrière en position relevée, le volume du coffre reste encore important, et pourrait être utilisé, pour transporter un à trois passagers supplémentaires en position assise.

L'installation d'un ou plusieurs sièges supplémentaires, en tant que troisième rangée, est donc envisageable. Ce ou ces sièges ont l'avantage d'être facilement amovibles, pliable et dépliables, Avec un poids raisonnable et grâce à leur facilité d'enlèvement et de replacement, le volume du coffre ne va pas être occupé de manière définitive par le ou les sièges. En outre, en étant repliés, le ou les sièges peuvent éventuellement rester dans le coffre, tout en monopolisant un volume assez faible, compatible avec l'ajout de bagages.

### ÉTAT DE LA TECHNIQUE ANTÉRIEURE

On connaît d'après le document FR- 2.705.627 A1 un siège solidaire d'un support de montage, comprenant un dossier et une assise. L'assise est indépendante du dossier, et se relève vers le haut, par rapport à un axe de pivotement avant, pour se plaquer contre un côté arrière du dossier du siège du rang précédent. Le dossier passe d'une position dépliée vers le haut à une position repliée sensiblement à l'horizontale, grâce à un mécanisme spécifique, assurant un basculement par rapport à un axe situé vers l'arrière.

Le mécanisme comprend deux biellettes latérales, comprenant chacune un premier et un deuxième axe de pivotement parallèles. La biellette située la plus à l'arrière porte un dispositif de verrouillage, permettant de bloquer le siège en position dépliée. Le dispositif de verrouillage vient immobiliser la biellette adjacente en coopérant avec une saillie prévue sur cette même biellette.

Cependant, un tel siège présente l'inconvénient majeur de ne pas pouvoir être facilement manipulé, en raison de la difficulté d'accès au dispositif de verrouillage. Le dépliage et le repli du siège nécessite deux opérations distinctes, l'assise présentant une cinématique distincte de celle du dossier. Ceci entraîne la nécessité d'avoir deux mécanismes différents, l'un étant dédié à l'assise et l'autre au dossier. En outre, ce siège présente un volume important à l'état replié. Ce volume replié est par ailleurs divisé en deux parties séparées, une partie consacrée à l'assise et une partie consacrée au dossier. Enfin, ce siège reste fixe dans le sens longitudinal, et ne tient pas compte de la morphologie de la personne qui s'y assoit.

### EXPOSÉ DE L'INVENTION

Un problème principal que se propose de résoudre l'invention consiste à mettre au point un siège automobile, pliable et dépliable, dont le verrouillage à l'état déplié est assuré par un dispositif simple, fiable, léger et peu coûteux. Un deuxième problème est de réaliser un siège dont le dispositif de verrouillage présente une bonne ergonomie, facilitant le blocage et le déblocage rapide du dossier. Un troisième problème est de prévoir un mécanisme pratique, permettant au dossier et à l'assise d'être simultanément déployés et repliés. Un autre problème est celui de rendre un siège facilement adaptable en fonction du physique de l'individu assis, tout en permettant de gagner de la place dans le volume arrière du véhicule automobile.

L'invention concerne donc un siège dépliable et repliable pour un véhicule automobile. Le siège comprend un support de siège, un dossier et une assise, ce dossier et cette assise passant d'une position repliée à une position dépliée. Le dossier est mobile par l'intermédiaire d'un mécanisme, possédant une première biellette latérale située en avant et une deuxième biellette latérale située en arrière. Le dossier est bloqué en position dépliée grâce à un dispositif de verrouillage venant coopérer avec la deuxième biellette.

Conformément à un premier aspect de la présente invention, telle que définie dans la revendication 1, le siège est caractérisé en ce que le dispositif de verrouillage est monté sur la première biellette.

Autrement dit, par un tel positionnement vers l'avant, le dispositif de verrouillage va présenter ainsi un accès plus aisé pour l'utilisateur. L'avant se définit comme étant la zone située en direction des genoux de l'utilisateur du siège, et l'arrière se définit comme étant la zone située en direction de l'ouverture ou du haillon arrière du véhicule. En configurant de manière spécifique le dispositif de verrouillage et par la coopération mutuelle de celui-ci et de la saillie sur la deuxième biellette, située en arrière, le fonctionnement du dispositif de verrouillage est simplifié. L'ergonomie du verrouillage du siège venant d'être déplié est améliorée. Il en est de même pour le déverrouillage lorsque l'utilisateur souhaite rabattre et replier le siège.

Dans une forme de réalisation avantageuse, et dans un souci de simplifier encore d'avantage le dispositif de verrouillage, la saillie peut se trouver dans le prolongement d'un premier axe de pivotement de la deuxième biellette. Le premier axe de pivotement de la deuxième biellette peut, de préférence, venir se loger dans une encoche ménagée dans la première biellette, lorsque le dispositif de verrouillage immobilise la deuxième biellette, le dossier étant alors bloqué en position dépliée. Avec cette encoche, une sortie du premier axe de pivotement et donc de la saillie venant en prise avec le dispositif de verrouillage est encore plus difficile. De plus, cette encoche évite tout retour intempestif du dossier vers sa position repliée, lorsque ce dernier est en position déplié, mais lorsque le dispositif de verrouillage n'est pas encore enclenché.

Le premier axe de pivotement de la première biellette et le premier axe de pivotement de la deuxième biellette peuvent être insérés à la base du dossier. Le premier axe de pivotement de la première biellette peut être positionné au-dessus du premier axe de pivotement de la deuxième biellette, lorsque le dossier se trouve en position dépliée.

Le dispositif de verrouillage peut être monté pour rotation entre le premier axe et le deuxième axe de pivotement de la première biellette, lorsque le dossier se trouve en position dépliée. Le dispositif de verrouillage peut être monté pour rotation entre le premier axe de pivotement de la première biellette et le premier axe de pivotement de la deuxième biellette, lorsque le dossier se trouve en position dépliée. Le dispositif de verrouillage peut comprendre une portion recourbée, apte à venir crocheter la saillie formée par le premier axe de pivotement rallongé de la deuxième biellette.

De manière particulièrement favorable, l'assise peut être solidaire du dossier et peut pivoter par rapport à la base du dossier, en passant d'une position repliée contre le dossier à une position dépliée sensiblement perpendiculaire au dossier. L'assise est couplée au dossier et accompagne le mouvement de déploiement et repliement du dossier. Lorsque le siège est totalement escamoté, l'assise et le dossier sont à peu près parallèles l'un par rapport à l'autre et sensiblement à l'horizontale. En position replié, le siège occupe ainsi un très faible volume. Aucun mécanisme n'est nécessaire pour la rotation de l'assise. Cette simplification entraîne ainsi une diminution du poids du siège.

Pour permettre un réglage, le support de siège peut être préférentiellement monté sur une ou plusieurs glissières longitudinales. De manière analogue au siège du conducteur et à celui du passager avant, le siège peut ainsi prendre plusieurs positions longitudinales différentes, par exemple au niveau du coffre arrière. Ceci permet de dégager un volume complémentaire au niveau du coffre arrière. Ce déplacement du siège par rapport à la banquette arrière qui précède se fait également en fonction de la corpulence de la personne s'asseyant sur le siège dépliable et repliable.

Pour avoir un véhicule modulable pouvant accueillir des occupants supplémentaires, le support de siège peut être monté dans un bac de réception, installé dans le coffre du véhicule automobile. Le bac, accompagné du siège totalement replié dans le creux du bac, s'insère de manière aisée à l'arrière du véhicule.

Conformément à un autre aspect de l'invention tel que défini dans la revendication 10, un véhicule automobile est caractérisé en ce qu'il comprend au moins un siège dépliable et repliable, tel que décrit ci-dessus, installé dans le coffre arrière.

### BRÈVE DESCRIPTION DES DESSINS

L'invention sera bien comprise et ses divers avantages et différentes caractéristiques ressortiront mieux lors de la description suivante, de l'exemple non limitatif de réalisation, en référence aux dessins schématiques annexés, dans lesquels :
- la Figure 1 représente une vue latérale partielle de l'intérieur d'un habitacle de véhicule automobile, équipé d'un siège au 3^{ème} rang, positionné dans le coffre d'un véhicule automobile ;
- les Figures 2 à 7 représentent des vues latérales montrant la cinématique de dépliage du siège, à partir de sa position complètement escamotée dans le coffre du véhicule jusqu'à une position totalement déployée ;
- la Figure 8 représente une vue latérale en détail du mécanisme d'escamotage et du mécanisme de verrouillage du siège en position déployée ;
- la Figure 9 représente une vue en coupe transversale partielle selon le plan IX -IX de la Figure 8 ; et
- la Figure 10 représente une vue latérale partielle, avec le siège placé dans une autre position longitudinale.

### EXPOSÉ DÉTAILLÉ DE MODES DE RÉALISATION PRÉFÉRÉS

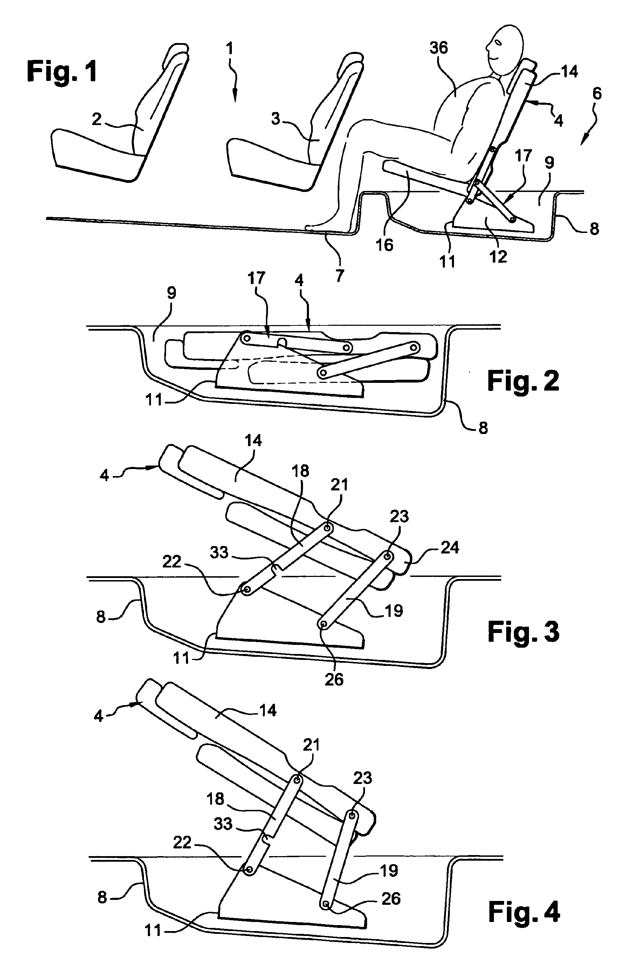

Comme l'illustre la Figure 1, l'habitacle (1) d'un véhicule automobile présente une première rangée de sièges (2), pour le conducteur et le passager avant, une deuxième rangée de sièges (3), du type banquette arrière et un ou plusieurs sièges (4), installé dans le volume du coffre (6).

Le siège (4), qui est destiné à être installé dans le coffre arrière (6) du véhicule, est installé au niveau du plancher arrière (7) du coffre (6). Un bac (8) sert de soubassement et permet de recevoir ce siège (4). Le siège (4) est du type dépliable et repliable. Le siège (4) passe ainsi d'une position complètement repliée (voir Figure 2), à l'intérieur du creux (9) délimité par le bac (8), à une position totalement dépliée (voir Figures 1, 7, 9 et 10), faisant saillie hors du bac (8). Le bac (8) sert ainsi de réceptacle du siège (4).

Le siège (4) comprend un support (11), qui est solidarisé au bac (8). Le support (11) est en forme de « U » élargi, et présente deux ailes latérales (12), avec une forme sensiblement triangulaire en vue de côté, ainsi qu'une plaque de base centrale (13) reliant les deux ailes (12) entre-elles.

Le siège (4) comprend un dossier (14) et une assise (16). A l'état replié, le dossier (14) et l'assise (16) se logent dans le creux (9) du bac (8), entre les deux ailes (12) du support (11). A l'état replié, l'assise (16) est positionnée sous le dossier (14).

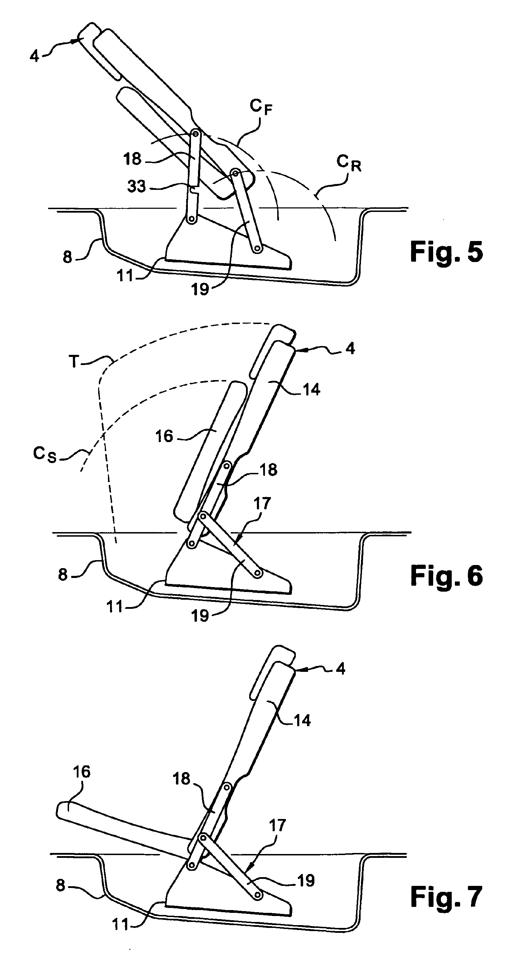

Le siège (4) se déplie, avec le dossier (14) accompagné de l'assise (16), en passant d'un état sensiblement horizontal (voir Figure 2) à un état redressé, de manière classique, légèrement incliné vers l'arrière (voir Figures 6 et 7). Le mouvement de dépliage du dossier (14) avec son assise (16) est un soulèvement, suivi par un basculement, en direction arrière par rapport au véhicule. Au cours du dépliage, l'assise reste plaquée contre le dossier (14).

Le dossier (14) se déplie et se replie grâce à un mécanisme (17) prévu à cet effet. Le mécanisme (17) assure la liaison mécanique entre le siège (4) et le support (11). Le mécanisme (17) est agencé latéralement au siège (4) et à son support (11). Le mécanisme (17) comprend quatre biellettes, deux étant placées à droite et deux étant placées à gauche. Pour les deux biellettes de gauche (la gauche étant définie en s'asseyant sur le siège), une première biellette (18) est située à l'avant, et une deuxième biellette (19) est située à l'arrière.

La première biellette avant (18) tourne par rapport au dossier (14) sur un premier axe supérieur transversal (21), sensiblement horizontal. Le premier axe (21) est inséré dans le côté latéral du dossier (14), au niveau de son tiers inférieur, vers sa base. La première biellette avant (18) tourne également par rapport au support (11) sur un deuxième axe inférieur transversal (22), sensiblement horizontal. Le deuxième axe (22) traverse l'aile (12) au niveau de son sommet.

La deuxième biellette arrière (19) tourne par rapport au dossier (14) sur un premier axe supérieur transversal (23), sensiblement horizontal. Le premier axe (23) est inséré dans le côté latéral du dossier (14), au niveau de sa base (24). La deuxième biellette arrière (19) tourne également par rapport au support (11) sur un deuxième axe inférieur transversal (26), sensiblement horizontal. Le deuxième axe (26) traverse l'aile (12) au niveau de son tiers inférieur en direction de la plaque de base (13).

Comme le montre la Figure 5, le premier axe supérieur (21) de la première biellette avant (18) décrit une trajectoire en arc de cercle (C_{F}). Comme le montre la Figure 5, le premier axe supérieur (23) de la deuxième biellette arrière (19) décrit une trajectoire en arc de cercle (C_{R}). La trajectoire (T) décrite (voir Figure 6) par le haut du dossier (14) est une résultante de ces deux trajectoires (C_{F} et C_{R}) de biellettes (18 et 19).

L'assise (16) pivote vers l'avant sur un axe transversal par rapport à la base (24) du dossier (14). La trajectoire (C_{S}) de l'assise (16) est représentée en Figure 6. L'assise (16) est mise en place à la fin du mouvement de déploiement du dossier (14).

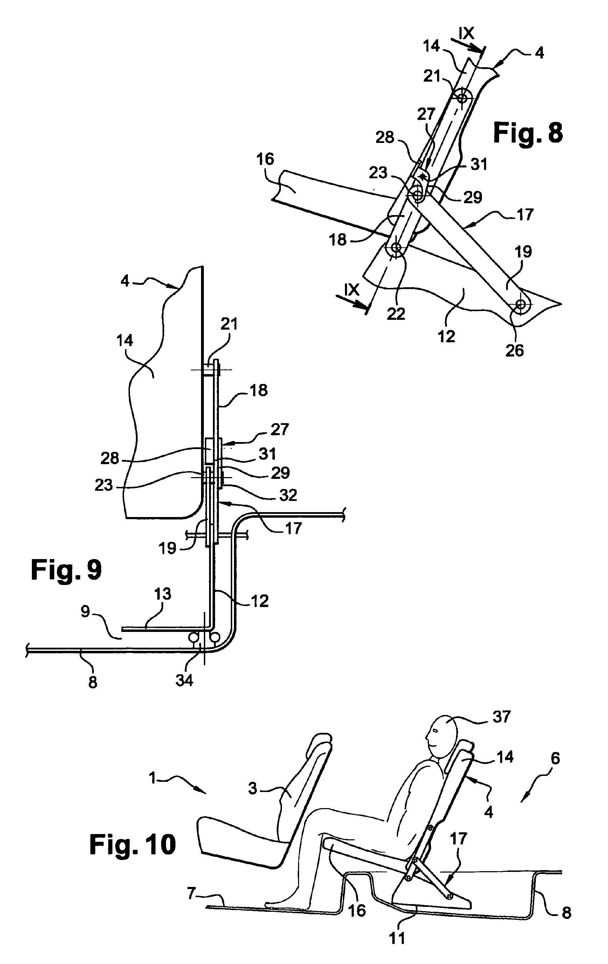

Un dispositif de verrouillage (27) permet de bloquer le dossier (14) et donc le siège (4) dans sa position dépliée. Le dispositif de verrouillage (27) vient se mettre en prise avec le mécanisme de dépliage et de repliement (17). Conformément à l'invention (voir Figures 8 et 9), le dispositif de verrouillage (27) est prévu au niveau de la première biellette avant (18). Le dispositif de verrouillage (27) est placé à l'extérieur de la première biellette avant (18). A partir de cette première biellette avant (18), le dispositif de verrouillage (27) est apte à bloquer tout mouvement de la deuxième biellette arrière (19).

Pour réaliser ce blocage, le dispositif de verrouillage (27) comprend une pièce de préhension (28) et un crochet (29). Le dispositif de verrouillage (27) pivote par rapport à un axe (31) inséré transversalement dans la première biellette avant (18). Le crochet (29) du dispositif de verrouillage (27) vient en prise avec un ergot ou une saillie (32), prévue sur la deuxième biellette arrière (19). La saillie (32) est formée par la prolongation du premier axe supérieur (23) de la deuxième biellette arrière (19).

Si le crochet (29) est en prise avec la saillie (32), aucun mouvement de la deuxième biellette arrière (19) par rapport à la première biellette avant (18) n'est possible. Le dispositif de verrouillage (27) est alors en position de blocage, lorsque le dossier (14) et ainsi le siège (4) sont en position totalement dépliée. Si le crochet (29) est désengagé de la saillie (32), le dispositif de verrouillage (27) est débloqué, et le dossier (14) et le siège (4) peuvent être basculés vers l'avant et repasser en position repliée.

Le dispositif de verrouillage (27) et la saillie (32) sont latéralement disposés le plus l'extérieur, par rapport au siège (4) et aux deux biellettes (18 et 19). Par le positionnement avant de la pièce de préhension (28) et de la saillie (32), le dispositif de verrouillage (27) va être beaucoup plus accessible. L'utilisateur saisit facilement la pièce de préhension (28) et fait pivoter le crochet (29) par rapport à son axe (31), de façon à le désengager ou à l'engager avec la saillie (32). Pour le dispositif de verrouillage (27), un moyen de rappel par ressort peut éventuellement être prévu.

Afin de favoriser le blocage complet du dossier (14), et comme cela est plus particulièrement visible dans les Figures 3 à 5, une encoche (33) est ménagée dans la première biellette avant (18). Le débouché de l'encoche (33) est orienté vers l'arrière et est prévu au point de contact entre le premier axe supérieur (23) de la deuxième biellette arrière (19) et de la première biellette avant (18). La prolongation du premier axe supérieur (23) de la deuxième biellette arrière (19), se continuant par la saillie (32), vient ainsi se loger dans l'encoche (33), lorsque le dossier (14) est en phase finale de dépliage.

Grâce à cette encoche (33), le premier axe supérieur (23) se retrouve coincé et ne peut ressortir que par le débouché de l'encoche (33), c'est-à-dire sensiblement perpendiculairement à la première biellette avant (18). Tout pivotement non souhaité de la deuxième biellette arrière (19), par rapport à la première biellette avant (18) est ainsi momentanément empêché et tout repliement intempestif du dossier (14) est évité, notamment lorsque le dispositif de verrouillage (27) n'est pas encore enclenché.

Comme cela apparaît dans les Figures 1 et 10, le siège (4) peut prendre plusieurs positions longitudinales (en X), par rapport au bac (8), par rapport au coffre (6), et ainsi par rapport au véhicule. Pour ce faire, le support (11) est monté sur deux glissières longitudinales (34). Un mécanisme d'arrêt (non représenté) permet de bloquer le coulissement du support (11) par rapport aux deux glissières (34) à la position souhaitée en X.

Ces positions longitudinales variables en X, permettent à un utilisateur plus corpulent (36) de s'asseoir sur le siège (4). Comme le montre la Figure 1, le siège (4) est repoussé en arrière, à proximité de l'ouverture du coffre (6). Le coffre (6) présente alors une capacité de chargement sensiblement égale à 5 % de sa capacité prévue.

Comme le montre la Figure 10, le siège (4) est poussé au maximum vers l'avant, à proximité de la banquette arrière (3). Cet emplacement permet à un utilisateur fluet ou à un enfant (37) de s'asseoir sur le siège (4). Le coffre (6) présente alors une capacité de chargement sensiblement égale à 95 % de sa capacité prévue.

La présente invention n'est pas limitée aux modes de réalisation décrits et illustrés. De nombreuses modifications peuvent être réalisées, pourvu qu'elles ne sortent pas du cadre défini par la portée du jeu de revendications.

## Revendications

1. Siège dépliable et repliable pour un véhicule automobile, comprenant un support (11) de siège (4), un dossier (14) et une assise (16), passant d'une position repliée à une position dépliée, le dossier (14) étant mobile par l'intermédiaire d'un mécanisme (17), possédant une première biellette latérale située en avant (18) et une deuxième biellette latérale située en arrière (19), le dossier (14) étant bloqué en position dépliée grâce à un dispositif de verrouillage (27) venant coopérer avec la deuxième biellette (19), **caractérisé en ce que** le dispositif de verrouillage (27) est monté sur la première biellette (18).

2. Siège selon la revendication 1, **caractérisé en ce que** le dispositif de verrouillage (27) vient coopérer avec une saillie (32) se trouvant dans le prolongement d'un premier axe de pivotement (23) de la deuxième biellette (19).

3. Siège selon la revendication 2, **caractérisé en ce que** le premier axe de pivotement (23) de la deuxième biellette (19) vient se loger dans une encoche (33) ménagée dans la première biellette (18), lorsque le dispositif de verrouillage (27) immobilise la deuxième biellette (19), le dossier (14) étant bloqué en position dépliée.

4. Siège selon la revendication 2 ou 3, **caractérisé en ce que** le premier axe de pivotement (21) de la première biellette (18) et le premier axe de pivotement (23) de la deuxième biellette (19) sont insérés à la base (24) du dossier (14), le premier axe de pivotement (21) de la première biellette (18) étant positionné au-dessus du premier axe de pivotement (23) de la deuxième biellette (19), lorsque le dossier (14) se trouve en position dépliée.

5. Siège selon l'une quelconque des revendications 2 à 4, **caractérisé en ce que** le dispositif de verrouillage (27) est monté pour rotation entre le premier axe (21) et le deuxième axe (22) de pivotement de la première biellette (18) et entre le premier axe de pivotement (21) de la première biellette (18) et le premier axe de pivotement (23) de la deuxième biellette (19), lorsque le dossier (14) se trouve en position dépliée.

6. Siège selon l'une quelconque des revendications 2 à 5, **caractérisé en ce que** le dispositif de verrouillage (27) comprend une portion recourbée (29), apte à venir crocheter la saillie (32).

7. Siège selon l'une quelconque des revendications précédentes, **caractérisé en ce que** l'assise (16) est solidaire du dossier (14) et pivote par rapport à la base (24) du dossier (14), en passant d'une position repliée contre le dossier (14) à une position dépliée sensiblement perpendiculaire au dossier (14).

8. Siège selon l'une quelconque des revendications précédentes, **caractérisé en ce que** le support (11) de siège (4) peut être monté sur une ou plusieurs glissières longitudinales (34).

9. Siège selon l'une quelconque des revendications précédentes, **caractérisé en ce que** le support (11) de siège (4) peut être monté dans un bac de réception (8), installé dans le coffre (6) du véhicule automobile.

10. Véhicule automobile, **caractérisé en ce qu'**il comprend au moins un siège (4) selon l'une quelconque des revendications précédentes, installé dans le coffre arrière (6).

## Patentansprüche

1. Auf- und zusammenklappbarer Sitz für ein Kraftfahrzeug, der einen Träger (11) des Sitzes (4), eine Rückenlehne (14) und eine Sitzfläche (16) aufweist, der von einer zusammengeklappten Position zu einer aufgeklappten Position übergeht, wobei die Rückenlehne (14) über einen Mechanismus (17) beweglich ist, der einen ersten seitlichen Schwinghebel (18) zur Vorderseite aufweist, und einen zweiten seitlichen Schwinghebel (19) zur Rückseite aufweist, wobei die Rückenlehne (14) in aufgeklappter Position dank einer Verriegelungsvorrichtung (27) blockiert ist, die mit dem zweiten Schwinghebel (19) zusammenwirkt, **dadurch gekennzeichnet, dass** die Verriegelungsvorrichtung (27) auf den ersten Schwinghebel (18) montiert ist.

2. Sitz nach Anspruch 1, **dadurch gekennzeichnet, dass** die Verriegelungsvorrichtung (27) mit einem Vorsprung (32) zusammenwirkt, der sich in der Verlängerung einer ersten Schwenkachse (23) des zweiten Schwinghebels (19) befindet.

3. Sitz nach Anspruch 2, **dadurch gekennzeichnet, dass** sich die erste Schwenkachse (23) des zweiten Schwinghebels (19) in eine Kerbe (33) fügt, die in dem ersten Schwinghebel (18) eingerichtet ist, wenn die Verriegelungsvorrichtung (27) den zweiten Schwinghebel (19) stillstellt, wobei die Rückenlehne (14) in aufgeklappter Position blockiert ist.

4. Sitz nach Anspruch 2 oder 3, **dadurch gekennzeichnet, dass** die erste Schwenkachse (21) des ersten Schwinghebels (18) und die erste Schwenkachse (23) des zweiten Schwinghebels (19) an der Basis (24) der Rückenlehne (14) eingefügt sind, wobei die erste Schwenkachse (21) des ersten Schwinghebels (18) oberhalb der ersten Schwenkachse (23) des zweiten Schwinghebels (19) positioniert ist, wenn sich die Rückenlehne (14) in aufgeklappter Position befindet.

5. Sitz nach einem der Ansprüche 2 bis 4, **dadurch gekennzeichnet, dass** die Verriegelungsvorrichtung (27) zum Drehen zwischen der ersten Schwenkachse (21) und der zweiten Schwenkachse (22) des ersten Schwinghebels (18) und zwischen der ersten Schwenkachse (21) des ersten Schwinghebels (18) und der ersten Schwenkachse (23) des zweiten Schwinghebels (19) montiert ist, wenn sich die Rückenlehne (14) in aufgeklappter Position befindet.

6. Sitz nach einem der Ansprüche 2 bis 5, **dadurch gekennzeichnet, dass** die Verriegelungsvorrichtung (27) einen umgebogenen Teil (29) aufweist, der sich in den Vorsprung (32) einhaken kann.

7. Sitz nach einem der vorhergehenden Ansprüche, **dadurch gekennzeichnet, dass** die Sitzfläche (16) fest mit der Rückenlehne (14) verbunden ist und in Bezug zu der Basis (24) der Rückenlehne (14) schwenkt, indem sie von einer gegen die Rückenlehne (14) zusammengeklappten Position zu einer aufgeklappten Position im Wesentlichen senkrecht zu der Rückenlehne (14) übergeht.

8. Sitz nach einem der vorhergehenden Ansprüche, **dadurch gekennzeichnet, dass** der Träger (11) des Sitzes (4) auf eine oder mehrere Längsgleitführungen (34) montiert werden kann.

9. Sitz nach einem der vorhergehenden Ansprüche, **dadurch gekennzeichnet, dass** der Träger (11) des Sitzes (4) in einem Aufnahmebehälter (8) montiert werden kann, der in dem Kofferraum (6) des Kraftfahrzeugs installiert ist.

10. Kraftfahrzeug, **dadurch gekennzeichnet, dass** es mindestens einen Sitz (4) nach einem der vorhergehenden Ansprüche, der in dem hinteren Kofferraum (6) installiert ist, aufweist.

## Claims

1. Seat for a motor vehicle, which seat can be folded up and unfolded and comprises a support (11) for a seat (4), a backrest (14) and a seating portion (16), the seat being able to pass from a folded-up position to an unfolded position, the backrest (14) being able to move by means of a mechanism (17), and having a first lateral articulated rod (18) located at the front and a second lateral articulated rod (19) located at the back, the backrest (14) being locked in the unfolded position by means of a locking device (27) which engages with the second articulated rod (19), **characterized in that** the locking device (27) is mounted on the first articulated rod (18).

2. Seat according to Claim 1, **characterized in that** the locking device (27) engages with a projection (32) located in the extension of a first pivot spindle (23) of the second articulated rod (19).

3. Seat according to Claim 2, **characterized in that** the first pivot spindle (23) of the second articulated rod (19) is accommodated in a notch (33) created in the first articulated rod (18) when the locking device (27) immobilizes the second articulated rod (19), the backrest (14) being locked in the unfolded position.

4. Seat according to Claim 2 or 3, **characterized in that** the first pivot spindle (21) of the first articulated rod (18) and the first pivot spindle (23) of the second articulated rod (19) are inserted in the base (24) of the backrest (14), the first pivot spindle (21) of the first articulated rod (18) being positioned above the first pivot spindle (23) of the second articulated rod (19) when the backrest (14) is in the unfolded position.

5. Seat according to any one of Claims 2 to 4, **characterized in that** the locking device (27) is mounted for rotation between the first pivot spindle (21) and the second pivot spindle (22) of the first articulated rod (18) and between the first pivot spindle (21) of the first articulated rod (18) and the first pivot spindle (23) of the second articulated rod (19) when the backrest (14) is in the unfolded position.

6. Seat according to any one of Claims 2 to 5, **characterized in that** the locking device (27) comprises a curved portion (29) which is designed to hook onto the projection (32).

7. Seat according to any one of the preceding claims, **characterized in that** the seating portion (16) is securely attached to the backrest (14) and pivots relative to the base (24) of the backrest (14), passing from a position in which it is folded up against the backrest (14) to an unfolded position substantially perpendicular to the backrest (14).

8. Seat according to any one of the preceding claims, **characterized in that** the support (11) for the seat (4) can be mounted on one or more longitudinal slide rails (34).

9. Seat according to any one of the preceding claims, **characterized in that** the support (11) for the seat (4) can be mounted in a receiving compartment (8) installed in the boot (6) of the motor vehicle.

10. Motor vehicle, **characterized in that** it comprises at least one seat (4), according to any one of the preceding claims, installed in the rear boot (6).
